# EUROPÄISCHE PATENTANMELDUNG

(11) **EP 1 055 783 A1**
(43) Veröffentlichungstag der Anmeldung: **29.11.2000**
(21) Anmeldenummer: 00111256.4
(22) Anmeldetag: 25.05.2000
(51) Int. Cl.: E04B 2/86, B29D 24/00, B29C 67/20, B65D 90/02

(54) **Mehrschicht-Wandstruktur**

(30) Priorität: 27.05.1999 DE 19924330
(71) Anmelder: Jüttner, Hans-Ulrich, 46562 Voerde (DE)
(72) Erfinder: Jüttner, Hans-Ulrich, 46562 Voerde (DE)
(74) Vertreter: Schoenen, Norbert

(57) **Zusammenfassung**

Die Mehrschicht-Wandstruktur umfaßt eine massive Wandschicht (2) und eine auf dieser befestigte hohlraumbildende Wandschicht (4) aus einem gewellten Gittermaterial (6). Auf das gewellte Gittermaterial kann eine weitere massive Wandschicht (40) aufgebracht werden, um eine doppelschalige Wand zu bilden. Eine besondere Verwendung findet die Erfindung bei der Bildung von doppelwandigen, zylindrischen Behältern. Dabei hat das gewellte Gittermaterial die Form von vorzugsweise in Mantellinienrichtung angeordneten Wellengitterstreifen (22).

## Beschreibung

Die vorliegende Erfindung betrifft eine Mehrschicht-Wandstruktur, umfassend wenigstens eine Vollmaterial-Wandschicht (massive Wandschicht) und wenigstens eine mit dieser verbundene hohlraumbildende Wandschicht, wobei die hohlraumbildende Wandschicht ein die massive Wandschicht wenigstens abschnittsweise überdeckendes, gewelltes Gittermaterial umfaßt. Sie betrifft weiter ein Verfahren für die Herstellung einer derartigen Wandstruktur und die Verwendung solcher Wandstrukturen.

Mehrschicht-Wandstrukturen der oben bezeichneten Art werden beispielsweise als Grundbauelemente für den Aufbau von doppelschaligen Wänden eingesetzt, bei denen auf die hohlraumbildende Wandschicht eine weitere massive Wandschicht aufgelegt wird, wobei die hohlraumbildende Wandschicht als Abstandhalter zwischen den massiven Wandschichten dient. Eine andere Anwendung ist die Verkleidung von Wandungen, beispielsweise Behälterwandungen, wobei das Material der Wandung beispielsweise auf die hohlraumbildende Schicht gegossen wird und in diese eindringt, um eine innige Verbindung zu schaffen.

Durch die US-PS 2 763 586 ist bereits ein Komposit-Plattenmaterial bekannt, bei welchem eine mit einer Streckmetall-Einlage verstärkte Gummischicht mit einer gewellten Metallgitter-Struktur belegt ist. Dabei besteht eine besondere Schwierigkeit darin, die Metallgitter-Struktur mit der verstärkten Gummischicht zu verbinden. In der genannten Druckschrift wird dazu eine besondere Gummi-Mischungsrezeptur angegeben. Wegen der besonderen Mischungsrezeptur einerseits und der metallischen Gitterstruktur andererseits ist die Verwendung auf besondere Anwendungsfälle beschränkt, bei denen eine Verträglichkeit der mit den Materialien in Verbindung kommenden Medien gegeben ist. Außerdem ist die Elastizität von gewellten Streckmetallgittern nicht sehr hoch, so daß auch hinsichtlich der Verformbarkeit des Plattenmaterials Beschränkungen bestehen. Ein weitere Nachteil wird darin gesehen, daß zur Verarbeitung der Streckmetall-Einlage und der Metallgitterstruktur leistungsstarke Maschinenanlagen erforderlich sind.

Es ist die Aufgabe der vorliegenden Erfindung, eine Mehrschicht-Wandstruktur der eingangs beschriebenen, gattungsgemäßen Art zu schaffen, die einfach herzustellen ist, bei der auf einfache Weise eine innige Verbindung zwischen der Vollmaterial-Wandschicht und der hohlraumbildenden Wandschicht erzielbar ist, die gute elastische Eigenschaften und Festigkeitseigenschaften aufweist, und die eine gute Resistenz gegen eine Vielzahl von mit dieser in Berührung kommenden Medien hat.

Diese Aufgabe ist erfindungsgemäß durch die im Anspruch 1 angegebenen Merkmal gelöst.

Dadurch, daß sowohl die Vollmaterial-Wandschicht als auch die hohlraumbildende Wandschicht und gegebenenfalls Flecht- und Verbindungsfäden jeweils aus faserverstärktem Kunstharz bestehen, ergeben sich einerseits günstige, preiswerte Herstellungsmöglichkeiten, da keine hohen Verarbeitungskräfte beispielsweise wie bei der Bearbeitung von metallischen Materialien erforderlich sind. Weiter lassen sich Harzmaterialien sehr gut miteinander verbinden, beispielsweise während des Aushärtens einer der beteiligten Wandschichten. Fertige Produkte aus faserverstärkten Kunststoffen haben überdies ausgezeichnete Festigkeits- und Elastizitätseigenschaften sowie eine gute Resistenz gegen eine Vielzahl von Medien, so daß für die erfindungsgemäßen Wandstrukturen ein äußerst weites Anwendungsfeld beispielsweise im Behälterbau, aber auch im Bauwesen allgemein, gegeben ist.

Durch die Wahl der Wellenhöhe des Gittermaterials kann die Dicke und Elastizität der hohlraumbildenden Wandschicht und damit das durch diese Wandschicht definierte Hohlraumvolumen weitgehend beliebig bestimmt werden. Die Gitterstruktur der hohlraumbildenden Wandschicht stellt dabei sicher, daß alle Bereiche der hohlraumbildenden Wandschicht miteinander kommunizieren, d.h., daß sich keine abgeschlossenen Bereiche bilden. Dies ist beispielsweise für Anwendungen von Bedeutung, bei denen sich ein in den Hohlraum eintretendes Medium beliebig ausbreiten können soll. Ein solcher Anwendungsfall liegt beispielsweise bei doppelwandigen Flüssigkeitsbehältern vor, bei denen durch die Innenwand hindurchtretende Leckageflüssigkeit zu einem tiefsten Punkt des Hohlraumes fließt und dort mittels eines Detektors detektiert wird. Ein anderer Anwendungsfall liegt beispielsweise vor, wenn in den durch die hohlraumbildende Wandschicht gebildeten Hohlraum ein Füllmaterial eingefüllt werden soll, oder wenn durch den Hohlraum warme oder kalte Medien zur Beheizung oder Kühlung geleitet werden sollen. Eine weitere Anwendung liegt beispielsweise vor, wenn die hohlraumbildende Wandschicht luftgefüllt bleibt und damit zur Wärmeisolierung dient.

Eine spannungsarme Wärmedehnung ist beispielsweise bei Schornsteinrohren oder Rohrleitungen zum Transport heißer oder kalter Medien von Bedeutung, wo jeweils die innere Schale eine gegenüber der äußeren Schale stark abweichende Temperatur hat.

Wenn die hohlraumbildende Wandschicht lediglich als Abstandhalter zwischen zwei massiven Wandschichten dienen soll, dann kann es für den Fall, daß diese Wandschichten eine ausreichende Eigensteifigkeit haben, genügen, daß die hohlraumbildende Wandschicht die massive Wandschicht nur abschnittsweise überdeckt, wie anhand eines Ausführungsbeispieles noch näher erläutert wird.

Das gewellte Gittermaterial ist vorzugsweise in einer Ausdehnungsrichtung gleichmäßig gewellt. Ein derartig ausgebildetes Gittermaterial hat die Eigenschaft, daß es in Richtung des Wellenverlaufes biegsam bleibt und deshalb an aufwickelbar gebogene Flächen, beispielsweise zylindrische Flächen, so angepaßt werden kann, daß es mit allen Wellentälern auf der massiven Wandschicht aufliegt und sich an dieser abstützt. Im Falle einer doppelschaligen Wand kann sich die zweite massive Wandschicht auf die Wellenberge des gewellten Gittermaterials auflegen, so daß auch eine gute Abstützung dieser zweiten massiven Wandschicht an der hohlraumbildenden Wandschicht sichergestellt ist.

Das gewellte Gittermaterial ist gemäß einer weiteren Ausgestaltung der Erfindung mit der massiven Wandschicht über eine Haftverbindung beispielsweise durch die Klebeeigenschaften der aushärtenden Harze selbst verbunden.

In einer Ausgestaltung der Erfindung ist vorgesehen, daß das gewellte Gittermaterial aus Wellengitterstreifen mit quer zu deren Längsausdehnung verlaufenden Wellen gebildet ist. Dabei werden die Wellengitterstreifen vorzugsweise mit seitlichem Abstand nebeneinander angeordnet, wie anhand eines Ausführungsbeispieles noch näher dargelegt wird.

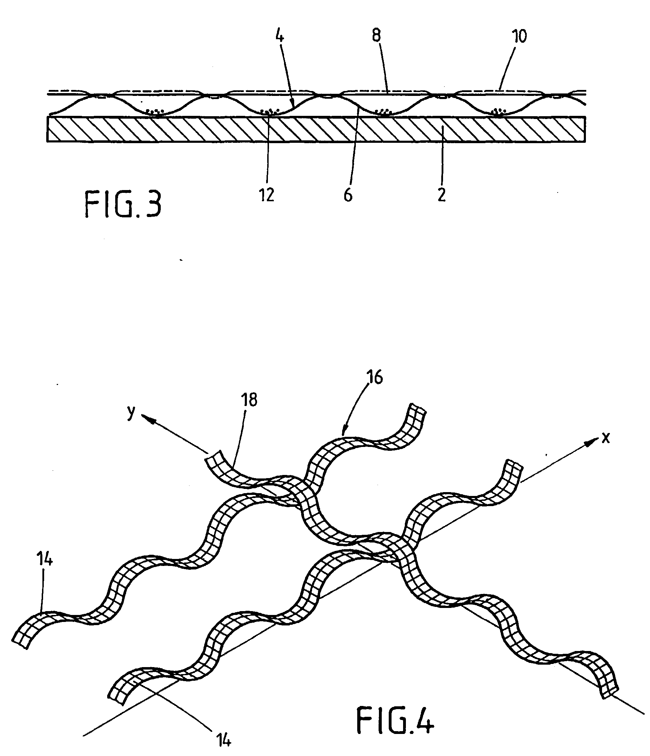

In einer weiteren Ausgestaltung der Erfindung ist vorgesehen, daß eine erste Lage von ersten Wellengitterstreifen sowie eine über der ersten Lage angeordnete zweite Lage von die ersten Wellengitterstreifen kreuzenden zweiten Wellengitterstreifen vorgesehen sind, wobei die zweiten Wellengitterstreifen in den Lücken zwischen den ersten Wellengitterstreifen auf der massiven Wandschicht aufliegen (Fig. 4).

Vor allem in den Fällen, in denen die hohlraumbildende Wandschicht aus mit Abstand zueinander angeordneten Wellengitterstreifen gebildet wird, kann die Notwendigkeit bestehen, für das Aufbringen einer zweiten massiven Wandschicht eine weitgehend kontinuierliche Unterlage zu schaffen. In diesem Fall ist erfindungsgemäß vorgesehen, daß auf der aus dem gewellten Gittermaterial gebildeten Wandschicht eine aus einem nicht gewellten Gittermaterial gebildete, mit dem gewellten Gittermaterial verbundene Gittermateriallage aufliegt. Auf dieser nicht gewellten Gittermateriallage kann dann eine äußere massive Wandschicht oder eine weitere Mehrschicht-Wandstruktur aufgelegt oder aufgebaut werden.

Gemäß einer weiteren Ausgestaltung der Erfindung wird das nicht gewellte Gittermaterial mit dem gewellten Gittermaterial mittels durch die Maschen beider Gittermaterialien hindurch geflochtener Flechtfäden verbunden (Fig. 2/Fig. 3).

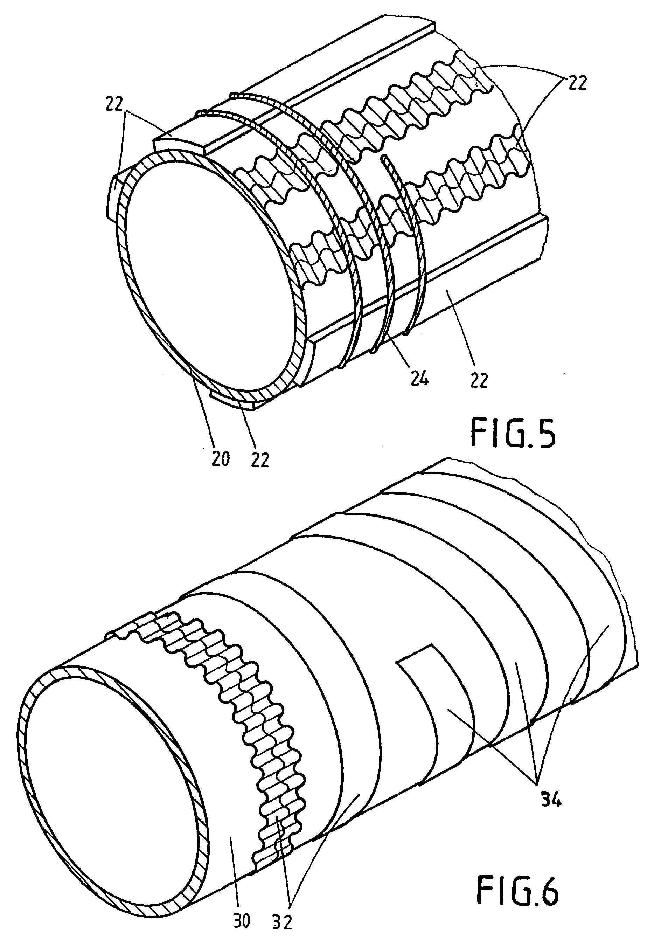

Die Mehrschicht-Wandstruktur kann grundsätzlich jede beliebige Form haben, d.h. flach oder gebogen sein. Eine bevorzugte Verwendung finden Mehrschicht-Wandstrukturen der gattungsgemäßen Art beim Aufbau von rohrförmigen Körpern, beispielsweise für Behälter; bei einem solchen Anwendungsfall wird erfindungsgemäß die Mehrschicht-Wandstruktur vorzugsweise rohrförmig mit einer auf einer Seite einer massiven Rohrwand ausgebildeten, hohlraumbildenden Wandschicht hergestellt, auf die eine weitere Wandschicht aufgelegt werden kann. Dabei besteht in bevorzugter Ausgestaltung der Erfindung die hohlraumbildende Wandschicht jeweils aus axial (in Mantellinienrichtung) verlaufenden Wellengitterstreifen. In einer anderen Ausgestaltung der Erfindung ist vorgesehen, daß die hohlraumbildende Wandschicht aus in Umfangsrichtung verlaufenden Wellengitterstreifen besteht. Eine weitere Möglichkeit ist, die hohlraumbildende Wandschicht aus spiralig verlaufenden Wellengitterstreifen zu bilden (Fig. 5/Fig. 6).

Ein Verfahren zur Herstellung einer Mehrschicht-Wandstruktur gemäß der vorliegenden Erfindung umfaßt erfindungsgemäß folgende Verfahrensschritte:
a) Herstellen einer massiven Wandschicht aus faserverstärktem Kunstharzmaterial und Anhärten derselben;
b) Herstellen und Zuschneiden des gewellten Gittermaterials aus faserverstärktem Kunstharzmaterial, wobei wenigstens eines der beiden Materialien noch nicht ausgehärtet ist;
c) Auflegen des gewellten Gittermaterials auf die massive Wandschicht und Fixieren auf derselben;
d) Aushärten des noch nicht ausgehärteten Materials.

Flächige Wandschichten werden dabei in bekannter Weise durch schichtweises Auflegen von Fasermatten und/oder Rovings und/oder Geweben in eine Form und Tränken derselben mit Kunstharz hergestellt; rohrförmige Wandschichten können mittels der bekannten Wickeltechnik hergestellt werden; das gewellte Gittermaterial erhält man durch Auflegen harzgetränkter Gittermatten auf eine gewellte Formunterlage oder durch Hindurchleiten durch Formwerkzeuge.

Um die Ausbildung einer zweiten massiven Wandschicht auf der Mehrschicht-Wandstruktur zu ermöglichen, sind ferner folgende Verfahrensschritte vorgesehen:
a) Herstellen und Tränken eines nicht gewellten Gittermaterials mit Kunstharz und Aushärten desselben;
b) Auflegen des ausgehärteten nicht gewellten Gittermaterials auf das gewellte Gittermaterial;
c) Befestigen des nicht gewellten Gittermaterials auf dem gewellten Gittermaterial mittels durch deren Maschen geflochtener Flechtfäden aus kunstharzgetränkten und nicht ausgehärteten oder ungetränkten Faserrovings;
d) gegebenenfalls Aushärten der Flechtfäden.

Die Fixierung des gewellten Gittermaterials auf der ersten massiven Wandschicht, insbesondere bei rohrförmigen Wandstrukturen, erfolgt gemäß einer weiteren Ausgestaltung der Erfindung mittels in den Wellentälern des gewellten Gittermaterials verlaufender Fixierfäden, wie anhand eines Ausführungsbeispieles näher dargelegt wird. Zur weiteren Befestigung des gewellten Gittermaterials auf der ersten massiven Wandschicht ist gemäß einer weiteren Ausgestaltung der Erfindung vorgesehen, daß zusätzliche Befestigungsfäden aus kunstharzgetränkten Faserrovings in die Wellentäler aufgewickelt und diese anschließend ausgehärtet werden.

In einer anderen Verwendung ist vorgesehen, daß zur Herstellung dünnwandiger und großflächiger Auskleidungen aus faserverstärktem Kunstharz vorzugsweise das allgemein bekannte Wickelverfahren eingesetzt wird. Hierbei wird zunächst ein dünnwandiger Rohrkörper auf möglichst großem Durchmesser bei angemessener Länge auf einen Wickelkern aufgewickelt. Danach wird das gewellte, vorzugsweise ausgehärtete Gittermaterial in Axial- und/oder Umfangsrichtung ausgerichtet aufgebracht und in den Wellentälern - wie zuvor beschrieben - fixiert. Nach Aushärtung der so entstandenen Wandstruktur mit außenliegendem Gittermaterial wird diese entlang einer Mantellinie aufgeschnitten, von der Wickelmaschine entfernt und auf dem Boden ausgebreitet. Die Elastizität der gesamten Wandstruktur ergibt sich einerseits aus der Dünnwandigkeit und andererseits aus der vergleichsweise hohen Flexibilität des gewellten Gittermaterials. Bei einem hinreichend großen Durchmesser-/Wanddickenverhältnis wirkt die so hergestellte Wandstruktur als dünne Folie, die sich nicht nur geradflächig, sondern beliebig gekrümmt, also auch umgekehrt gewendet, das Gittermaterial nach innen und die glatte Wickelformfläche nach außen zeigend, verformen läßt. Gerade auf dem Boden liegend wird die Wandstruktur den maßlichen Bedürfnissen entsprechend zugeschnitten, auf der Baustelle zusammengesetzt und unter Einsatz des üblichen Handlaminatverfahrens verbunden und so eine zusammenhängende Auskleidung erzeugt.

In einer besonderen Verwendung einer Mehrschicht-Wandstruktur (nach obiger Fertigungsmethode hergestellt) ist vorgesehen, daß zur Herstellung einer zweischaligen Wand zwei Mehrschicht-Wandstrukturen mit den massiven Wandschichten nach außen angeordnet und der Zwischenraum zwischen diesen mit einem Füllmaterial ausgefüllt wird. Als Füllmaterial kommen beispielsweise Beton, Gips, Schaumstoff, Lehm oder ähnliche Materialien in Frage. In diesem Fall dient die hohlraumbildende Wandschicht sowohl als Armierung für das Füllmaterial als auch als Formschluß für die massive Wandschicht. Die Flächenhaftung zwischen dem Füllmaterial und der massiven Wandschicht wird somit durch die intensive Einbettung des gewellten Gittermaterials in das Füllmaterial entscheidend verbessert. Eine Ablösung ist nur durch Zerstörung des Füllmaterials vorstellbar.

In einer weiteren Verwendung ist vorgesehen (nach obiger Fertigungsmethode hergestellt), die flach auf dem Boden liegende Wandstruktur gewendet auf die Wickelmaschine zurückzulegen, so daß die glatte Wickelformfläche nach außen und das gewellte Gittermaterial nach innen zur Wickeltrommel zeigt. Der sich zwangsläufig ergebende Längsspalt entlang der Mantellinie - hervorgerufen durch die Durchmesservergrößerung von zwei Lagen gewelltem Gittermaterial - wird durch Auflegen von geradem, nicht gewelltem und ausgehärtetem Gittermaterial und durch den anschließenden normalen Wickelprozeß überbrückt. In einem solchen Rohr können beispielsweise völlig andere oder spezielle Auskleidungsmaterialien an dem innenliegenden Gittermaterial befestigt werden, so daß sich damit ganz neue Anwendungsgebiete erschließen lassen.

Mehrere Ausführungsbeispiele der Erfindung sind in der Zeichnung dargestellt und im folgenden näher beschrieben. Es zeigen:
- Fig. 1: in perspektivischer Darstellung schematisch eine Mehrschicht-Wandstruktur mit einer massiven Wandschicht und einer hohlraumbildenden Wandschicht;
- Fig. 2: schematisch eine Mehrschicht-Wandstruktur mit einer massiven Wandschicht, einer hohlraumbildenden Wandschicht aus einem gewellten Gittermaterial und einer Lage aus nicht gewelltem Gittermaterial (als Grundlage für den weiteren Materialaufbau der Außenwand);
- Fig. 3: einen Querschnitt durch eine Anordnung gemäß der Fig. 2;
- Fig. 4: schematisch die Anordnung von sich kreuzenden Wellengitterstreifen;
- Fig. 5: schematisch einen Rohrkörper mit axial ausgerichteten Wellengitterstreifen;
- Fig. 6: einen Rohrkörper mit Beispielen für in Umfangsrichtung und spiralig angeordneten Wellengitterstreifen;
- Fig. 7: einen Querschnitt durch eine aus einer Mehrschicht-Wandstruktur sowie einer weiteren massiven Wandschicht aufgebaute Wand;
- Fig. 8: eine aus zwei Mehrschicht-Wandstrukturen aufgebaute Wand mit einer dazwischen angeordneten Materialfüllung;
- Fig. 9: eine aus zwei Mehrschicht-Wandstrukturen aufgebaute Wand mit dazwischen belassenem Hohlraum.
- Fig. 10: eine Wandstruktur etwa gemäß der Fig. 7 als Verkleidung einer Betonwand;
- Fig. 11 und 12: jeweils eine Einrichtung zum Herstellen eines gewellten Gittermaterials;
- Fig. 13: eine Einrichtung zur Herstellung einer Mehrschicht-Wandstrukur;
- Fig. 13A: eine Einzelheit aus der Fig. 13;
- Fig. 13B: eine andere Einzelheit aus der Fig. 13.

Die vorliegende Erfindung wird im folgenden anhand einer Mehrschicht-Wandstruktur erläutert, bei welcher die massive Wandschicht, das gewellte Gittermaterial und gegebenenfalls das nicht gewellte Gittermaterial sowie die Flechtfäden aus faserverstärktem Kunstharz gebildet sind. Bei Verwendung dieser Materialien ergeben sich Vorteile, die im folgenden näher erläutert werden. Es sei an dieser Stelle erläutert, daß als Vollmaterial- oder massive Wandschicht eine nicht poröse, d.h. undurchlässige Wandschicht bezeichnet wird.

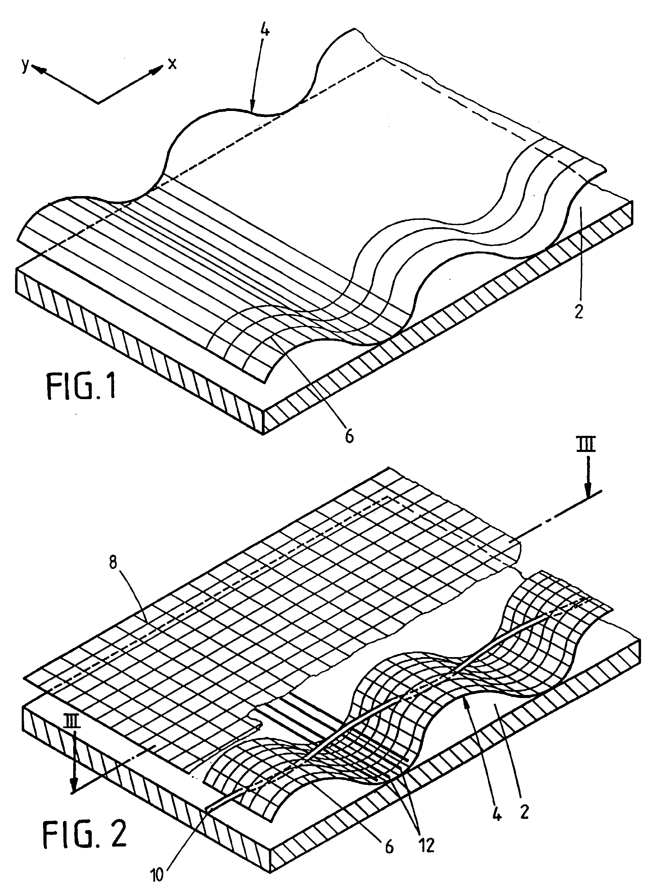

Die in Fig. 1 dargestellte Mehrschicht-Wandstruktur umfaßt eine aus kunstharzgetränkten Fasergeweben oder -matten gebildete massive Wandschicht 2 und eine auf dieser aufliegende, mit ihr verbundene hohlraumbildende Wandschicht 4 aus einem gewellten Gittermaterial 6. Das gewellte Gittermaterial ist aus einem Fasergitter, beispielsweise einem Glasfasergitter dadurch gebildet, daß dieses mit Kunstharz getränkt und z.B. auf eine wellenförmige Unterlage aufgelegt wird, so daß es nach dem Aushärten die dargestellte Wellenstruktur hat. Wie die Fig. 1 erkennen läßt, ist das Gittermaterial 6 in einer Ausdehnungsrichtung X gleichmäßig gewellt. Das Gittermaterial 4 liegt dabei jeweils mit dem Wellengrund jeder Welle auf der massiven Wandschicht 2 auf, so daß eine gute Verbindung zwischen diesen gewährleistet ist. Andere Wellenstrukturen, insbesondere auch in beiden Achsrichtungen X und Y gewellte Gittermaterialien sind möglich.

Zur Herstellung der in Fig. 1 dargestellten Wandschicht wird vorzugsweise die massive Wandschicht 2 in bekannter Weise durch Übereinanderlaminieren mehrerer kunstharzgetränkter Fasermaterialien aufgebaut. Auf die noch nicht ausgehärtete massive Wandschicht 2 wird beispielsweise das zuvor hergestellte, ausgehärtete Gittermaterial 6 aufgelegt und aufgedrückt. Durch das Auflegen der Fixierfäden und das Aushärten der massiven Wandschicht 2 entsteht eine Verklebung des Gittermaterials 6 mit der Wandschicht 2.

Die Fig. 1 stellt eine ebene Wandstruktur dar. Es ist selbstverständlich auch möglich, beispielsweise durch Einlegen der Fasermatten in Negativformen der Wandstruktur beliebige andere Formen zu geben. Dabei kann sich das in einer Richtung x gewellte Gittermaterial 6 auch nach seiner Aushärtung ohne weiteres an eine in einer Krümmungsebene gekrümmte, massive Wandschicht 2 anpassen. Das Gittermaterial 6 kann sich in der anderen Richtung y entweder durch parallel versetzte gewellte Gittermaterialstreifen 6 oder durch 90° dazu sich kreuzende gewellte Gittermaterialstreifen anpassen (Fig. 4).

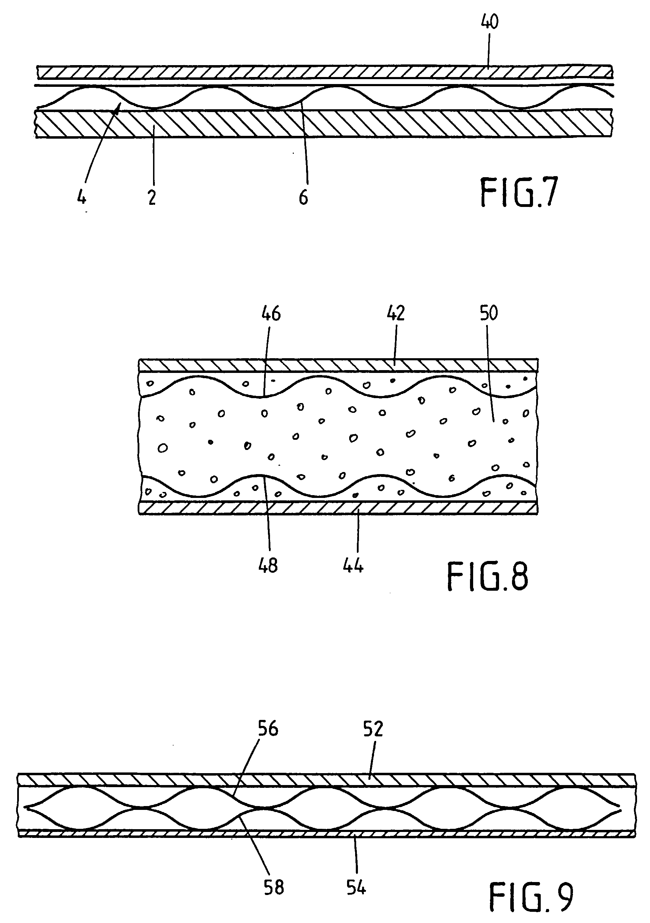

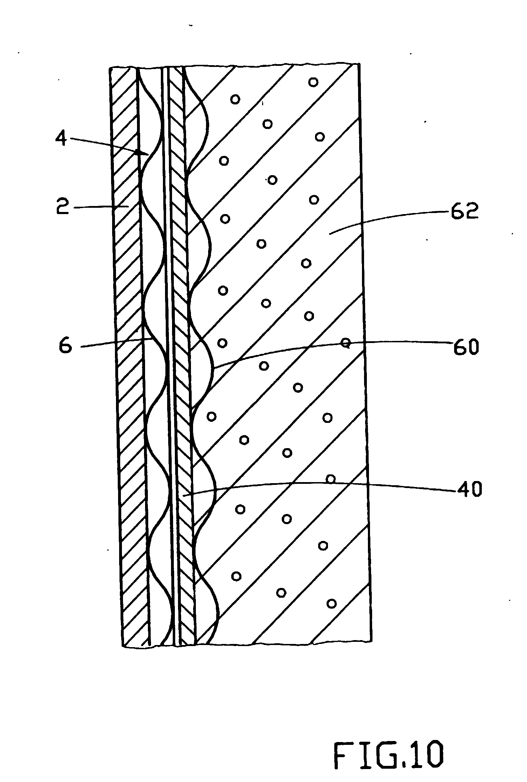

Fig. 2 zeigt eine Mehrschicht-Wandstruktur mit einem Grundaufbau entsprechend der Fig. 1, mit einer massiven Wandschicht 2 und einer hohlraumbildenden Wandschicht 4 aus einem gewellten Gittermaterial 6, wobei jedoch auf das gewellte Gittermaterial 6 eine weitere Lage aus einem nicht gewellten Gittermaterial 8 aufgelegt ist. Das nicht gewellte Gittermaterial 8 verstärkt einerseits die Struktur des gewellten Gittermaterials 6 beträchtlich. Es bildet zudem eine ebene Auflage, auf die gegebenenfalls eine weitere massive Wandschicht oder eine weitere Mehrschicht-Wandstruktur aufgebracht werden kann, wie in Fig. 7 und Fig. 10 dargestellt ist.

Zur Herstellung der in Fig. 2 dargestellten Wandstruktur wird auf das gewellte Gittermaterial 6 das zuvor hergestellte ausgehärtete, nicht gewellte Gittermaterial aufgelegt und mit diesem verbunden. Die Verbindung erfolgt beispielsweise mittels Flechtfäden 10 aus kunstharzgetränkten und aushärtenden Faserrovings. Wie die Fig. 2 erkennen läßt, werden die Flechtfäden 10 durch Maschen des gewellten Gittermaterials 6 und des nicht gewellten Gittermaterials 8 hindurch verflochten, so daß sie nach dem Aushärten eine weitere formhaltende Verstärkung bilden. Die durch das nicht gewellte Gittermaterial 8 gebildete, vorwiegend kleinmaschige Fläche erlaubt es, eine weitere massive Wandschicht auf diese aufzulegen oder auf dieser zu laminieren bzw. eine weitere Mehrschicht-Wandstruktur auf dieser aufzubauen. Es besteht auch die Möglichkeit, eine aus dem gewellten Gittermaterial 6 und dem nicht gewellten Gittermaterial 8 bestehende Wandstruktur zu bilden und diese auf die - vorzugsweise noch nicht ausgehärtete - massive Wandschicht aufzubringen.

Das nicht gewellte Gittermaterial 8 hat im vorliegenden Beispiel eine ebene Form; es kann jedoch im Falle gekrümmter Wandstrukturen ohne weiteres eine von einer ebenen Form abweichende, an die Form der aus der massiven Wandschicht 2 und der hohlraumbildenden Wandschicht 6 gebildeten Grundstruktur angepaßte gebogene Form haben.

Fig. 2 zeigt weiter eine Möglichkeit, um das gewellte Gittermaterial 6 besser als durch einfache Verklebung mit der massiven Wandschicht 2 auf dieser zu befestigen. Zu diesem Zweck sind in den Wellengrund einer jeden Welle des Gittermaterials 6 Fixierfäden 12 eingelegt, die ebenfalls aus kunstharzgetränkten Faserrovings gebildet sind. Diese verkleben beim Aushärten innig mit dem aushärtenden Material der massiven Wandschicht 2 und bilden so eine äußerst wirksame Fixierung des gewellten Gittermaterials.

Fig. 3 zeigt einen Querschnitt in Richtung der Schnittlinie III-III der Fig. 2. Die in den Fig. 2 und 3 dargestellte Mehrschicht-Wandstruktur eignet sich insbesondere auch zum Aufbau einer doppelschaligen Wand gemäß der Fig. 7 oder der Fig. 10, wenn eine zweite massive Wandschicht oder eine weitere Mehrschicht-Wandstruktur auf der Mehrschicht-Wandstruktur laminiert werden soll.

Im folgenden wird auf die Fig. 4 Bezug genommen. Für den Aufbau von sphärisch gekrümmten, nicht wickelbaren Flächen werden auf eine (in Fig. 4 nicht dargestellte) massive Wandschicht erste, beispielsweise in X-Richtung verlaufende Wellengitterstreifen 14 mit Abstand zueinander aufgelegt. Diese Wellengitterstreifen 14 können einer Krümmung in X-Richtung ohne weiteres folgen. Sie behindern wegen ihrer geringen Breite aber auch eine Krümmung in Y-Richtung nicht. Zur weiteren Stabilisierung der hohlraumbildenden Wandschicht 16 gemäß Fig. 4 können weitere, die ersten Wellengitterstreifen 14 kreuzende zweite Wellengitterstreifen 18 vorgesehen sein, deren Wellengrund jeweils in den Lücken zwischen den ersten Wellengitterstreifen 14 auf der massiven Wandschicht aufliegen, wie sich aus der Fig. 4 ergibt. Die zweiten Wellengitterstreifen 18 können ohne weiteres einer Krümmung in Y-Richtung folgen und behindern eine Krümmung in X-Richtung nicht. Auf die aus den ersten Wellengitterstreifen 14 und den zweiten Wellengitterstreifen 18 gebildete hohlraumbildende Wandschicht 16 kann eine Lage aus einem ebenen Gittermaterial etwa entsprechend den Fig. 2 und 3 aufgelegt werden, die mit den Wellengitterstreifen mittels Flechtfäden verbunden und z. B. mit üblichem Handlaminat- und/oder Faserspritzverfahren wandungsgemäß weiter aufgebaut wird.

Fig. 5 zeigt eine weitere Ausgestaltung der vorliegenden Erfindung. Sie zeigt eine rohrförmige Mehrschicht-Wandstruktur mit einer rohrförmigen, massiven Wandschicht 20 sowie auf der Außenseite derselben angeordneten, in Mantellinienrichtung verlaufenden Wellengitterstreifen 22, welche die hohlraumbildende Wandschicht definieren. Die Wellengitterstreifen 22 sind mit Abstand zueinander über den ganzen Umfang der rohrförmigen Wandschicht 20 verteilt angeordnet; sie sind der Übersichtlichkeit halber in der Fig. 5 nur zweimal zeichnerisch ausgebildet, im übrigen aber schematisch dargestellt.

Die Herstellung erfolgt z.B. in der Weise, daß nach einem herkömmlichen Wickelverfahren die rohrförmige Wandschicht 20 hergestellt wird. Auf die noch nicht ausgehärtete rohrförmige Wandschicht 20 werden die zuvor in der im Zusammenhang mit der Fig. 1 beschriebenen Weise hergestellten, ausgehärteten und zugeschnittenen Wellengitterstreifen 22 aufgelegt und mittels eines um diese Anordnung gewickelten, durch die jeweiligen Wellentäler der Wellengitterstreifen 22 verlaufenden Fixierfadens 24 fixiert. Nach dem Aushärten der rohrförmigen Wandschicht 20 sind die Wellengitterstreifen 22 fest mit dieser verbunden.

Die in der Fig. 5 dargestellte Mehrschicht-Wandstruktur ist insbesondere für die Herstellung von doppelwandigen Rohren geeignet. Hierzu wird auf die Wellengitterstreifen 22 ein nicht gewelltes Gittermaterial aufgelegt und auf dieses eine weitere rohrförmige Wandschicht gewickelt. Da dieses Verfahren dem anhand der Fig. 2 und 3 erläuterten Verfahren für ebene Strukturen entspricht, ist es nicht nochmals zeichnerisch dargestellt worden.

Fig. 6 zeigt schematisch weitere Möglichkeiten für die Anordnung von Wellengitterstreifen auf einer rohrförmigen Wandschicht 30. Demnach können die Wellengitterstreifen 32 in Umfangsrichtung um die rohrförmige Wandschicht 30 herum gelegt sein, oder ein fortlaufender Wellengitterstreifen 34 kann spiralig um die rohrförmige Wandschicht 30 gewickelt sein. Rohrförmige Wandstrukturen der anhand der Fig. 5 und 6 beschriebenen Art eignen sich sehr gut zur Herstellung von doppelwandigen Behältern; dabei werden die offenen Enden der Rohre in geeigneter, an sich bekannter Weise durch Behälterböden geschlossen. Die Doppelwandigkeit der Behälterböden wird prinzipiell nach Figur 4 und wie in der obigen Erläuterung zu Figur 4 beschrieben, erreicht.

Die Fig. 7 bis 9 zeigen schematisch verschiedene Verwendungen für Mehrschicht-Wandstrukturen gemäß der vorliegenden Erfindung.

Fig. 7 zeigt eine Mehrschicht-Wandstruktur gemäß der Fig. 2 mit einer massiven Wandschicht 2, einer darauf angeordneten hohlraumbildenden Wandschicht 4 aus einem gewellten Gittermaterial 6, einer darauf angeordneten Lage aus einem ebenen Gittermaterial 8 und einer auf dieser aufliegenden weiteren massiven Wandschicht 40. Die massive Wandschicht 40 kann im Wickel- und/oder Faserspritz-Verfahren hergestellt und auf das Gittermaterial 8 aufgelegt werden; sie kann aber auch auf dieser direkt durch Laminieren aufgebaut werden. Auf diese Weise kann mit einfachen Herstellungsverfahren eine doppelschalige Hohlwand hergestellt werden. Das beschriebene Verfahren kann in analoger Weise für gekrümmte oder rohrförmige Strukturen verwendet werden.

Fig. 8 zeigt eine Anordnung, bei der zwei MehrschichtWandstrukturen gemäß der Fig. 1 mit den jeweiligen massiven Wandschichten 42, 44 nach außen gelegt sind. Der zwischen den Wandstrukturen verbleibende Zwischenraum ist mit einem Füllmaterial 50, beispielsweise Beton, Gips, Schaumstoff, Lehm oder dergleichen ausgefüllt. Das die hohlraumbildende Wandschicht darstellende gewellte Gittermaterial 46, 48 dient im wesentlichen als Armierung für das Füllmaterial 46.

Fig. 9 zeigt eine Anordnung, bei der ebenfalls zwei Mehrschicht-Wandstrukturen gemäß der Fig. 1 mit den massiven Wandschichten 52, 54 nach außen übereinandergelegt sind. Bei der in Fig. 9 gezeigten Anordnung stützen sich die beiden gewellten Gittermaterialien 56, 58 aneinander ab, so daß sie in diesem Fall als Abstandhalter wirken. Der zwischen den Wandstrukturen verbleibende Hohlraum kann, ebenso wie bei der Ausgestaltung der Fig. 7, bei Bedarf wiederum mit einem geeigneten Füllmaterial ausgefüllt werden.

Eine ebene Wand mit einem Querschnitt etwa gemäß der Fig. 7 oder Fig. 10 kann durch Ausbilden einer Rohrwand etwa gemäß den Fig. 5 oder 6, Aufschneiden derselben entlang einer Mantellinie und Ausbreiten in flacher Form hergestellt werden, wobei die Wellengitterstreifen sowohl in Axial- und/oder Umfangsrichtung angeordnet werden können.

Fig. 10 zeigt eine Wandstruktur etwa gemäß der Fig. 7, wobei gleiche Teile mit gleichen Bezugszahlen bezeichnet sind. Dabei ist auf die weitere massive Wandschicht 40 ein weiteres Wellengitter 60 aufgelegt. Die so gebildete Wandstruktur ist als doppelwandige Verkleidung, beispielsweise einer Betonwand 62, eingesetzt. Das Wellengitter 60 dient in der anhand der Fig. 8 beschriebenen Weise zur Herstellung einer innigen Verbindung zum eingegossenen Betonmaterial 62. Das innere Wellengitter 6 dient als Abstandhalter zwischen den Wandschichten 2 und 40, wobei es aufgrund der Gitterstruktur Konvektionsbewegungen des in dem Hohlraum befindlichen Mediums, beispielsweise Luft, nicht behindert.

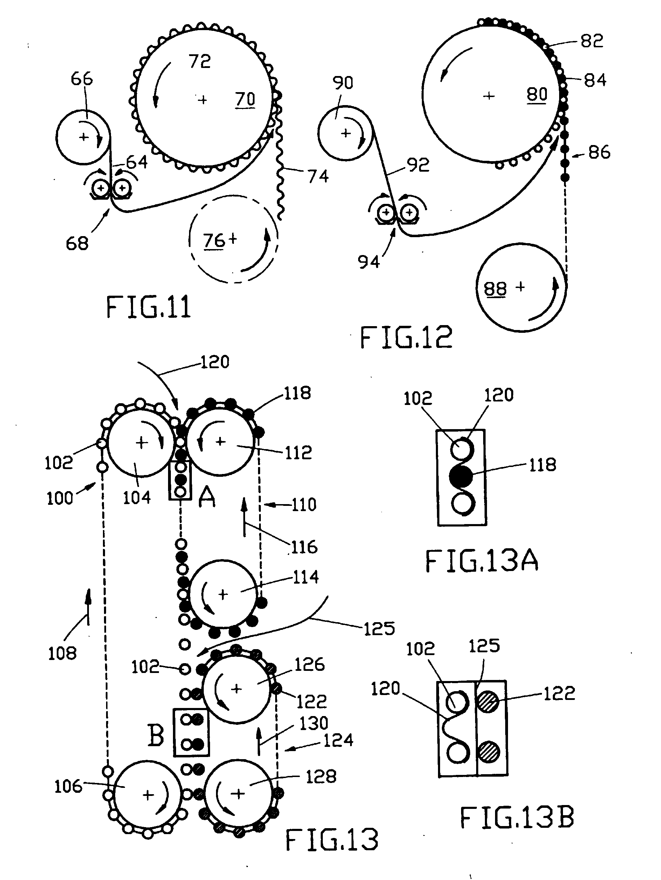

Fig. 11 zeigt ein Verfahren zum Herstellen eines gewellten Gittermaterials. Ein ebenes Gittermaterial 64 läuft von einer Vorratsrolle 66 ab durch ein Harztränkbad 68 und sodann auf eine Trommel 70, die sich in Richtung des Pfeiles 72 dreht.

Auf die Trommel 70 wird ein gewelltes Bandmaterial 74, beispielsweise Wellblech, das von einer Vorratsrolle 76 abläuft, in einer ersten Lage aufgewickelt, wie Fig. 11 zeigt, so daß die Trommel 70 eine gewellte Oberfläche bekommt. Gleichzeitig mit dem Wickeln der zweiten Lage des Bandmaterials 74 wird das Gittermaterial zwischen die erste Lage und die zweite Lage eingeführt. Wenn sich die Wellenberge der zweiten Lage in die Wellentäler der ersten Lage legen, formen sie zwischen sich das Gittermaterial 64 zu einer Wellenstruktur. Es versteht sich, daß auch mehr als zwei Lagen des Bandmaterials 74 aufgewickelt und zwischen diesen eine entsprechende Anzahl von Lagen des Gittermaterials geformt werden können.

Fig. 12 zeigt eine ähnliche Anordnung wie Fig. 11, wobei jedoch die gewellte Oberfläche der Trommel 80 durch auf dieser angeordnete achsparallele Stäbe 82 (weiß dargestellt) gebildet ist, die in Umfangsrichtung einen Abstand zueinander haben.

Ein aus parallelen, hintereinander angeordneten Stäben 84 (schwarz dargestellt) gebildetes Band 86 läuft von einer Trommel 88 ab und auf die Trommel 80 auf.

Ein von einer Vorratstrommel 90 ablaufendes ebenes, getränktes Gittermaterial 92 läuft durch ein Harztränkbad 94 und wird zwischen die Oberfläche der Trommel 80 und das Band 86 geleitet. Die Stäbe 84 des Bandes 86 legen sich in die Lücken zwischen den Stäben 82 der Trommel; das dazwischen liegende Gittermaterial 92 wird zu einer Wellenstruktur geformt.

Fig. 13 zeigt ein Verfahren zum Bilden einer Mehrschicht-Wandstruktur etwa gemäß der Fig. 1. Ein erstes Prägeband 100, welches wie das Band 86 der Fig. 12 aus hintereinander angeordneten, miteinander verbundenen Stäben 102 gebildet ist, läuft über die beiden Rollen 104 und 106 und wird durch diese in Richtung des Pfeiles 108 angetrieben. Parallel zu dem oberen Abschnitt des Prägebandes 100 ist ein mit diesem zusammenwirkendes zweites Prägeband 110, welches über Rollen 112, 114 läuft und in Richtung des Pfeiles 116 angetrieben wird, vorsehen. Die Stäbe 118 (schwarz dargestellt) des zweiten Prägebandes greifen in die Lücken zwischen den Stäben 102 (weiß dargestellt) des ersten Prägebandes. Ein zwischen die Prägebänder 100, 110 geführtes harzgetränktes Gittermaterial 120 wird zwischen diesen zu einer Wellenstruktur geformt.

Parallel zu dem unteren Abschnitt des ersten Prägebandes 100 ist ein in diesem Ausführungsbeispiel wieder aus Stäben 122 gebildetes Andruckband 124 angeordnet, welches über Rollen 126, 128 geführt ist und in Richtung des Pfeiles 130 angetrieben wird. Die Stäbe 122 legen sich jeweils genau an Stäbe 102 des ersten Prägebandes an.

Ein zwischen den unteren Abschnitt des ersten Prägebandes 100 und das Andruckband 124 geführtes, harzgetränktes Materialband 125 (z.B. aus Fasermatten usw.), welches zu einer massiven Wandschicht aushärten soll, wird durch das Andruckband 124 an das gewellte Gittermaterial 120 angedrückt, so daß eine Wandstruktur ähnlich der in Fig. 1 gezeigten entsteht. Im Verlaufe des Durchlaufens zwischen dem ersten Prägeband 100 und dem Andruckband 124 härten das Gittermaterial 120 und das Materialband aus, so daß diese innig miteinander verkleben.

Die Fig. 13A zeigt eine Einzelheit A aus Fig. 13. Sie läßt erkennen, wie das Gittermaterial 120 zwischen den Stäben 102 und 118 gewellt wird.

Fig. 13B zeigt eine Einzelheit B aus Fig. 13. Sie läßt erkennen, wie das Materialband 125 durch das Andruckband 124 an das gewellte Gittermaterial 120 angedrückt wird.

## Patentansprüche

1. Mehrschicht-Wandstruktur, umfassend wenigstens eine Vollmaterial-Wandschicht (massive Wandschicht) und wenigstens eine mit dieser verbundene hohlraumbildende Wandschicht, wobei die hohlraumbildende Wandschicht (4) ein die massive Wandschicht (2) wenigstens abschnittsweise überdeckendes gewelltes Gittermaterial (6) umfaßt,
dadurch gekennzeichnet,
daß die massiven Wandschichten (2) und das Gittermaterial (6, 8) und gegebenenfalls Fixier- und Flechtfäden (10) zum Verbinden unterschiedlicher Wandschichten aus faserverstärktem Kunstharz bestehen.

2. Mehrschicht-Wandstruktur nach Anspruch 1,
dadurch gekennzeichnet,
daß das gewellte Gittermaterial (6) in einer Ausdehnungsrichtung (X) gleichmäßig gewellt ist.

3. Mehrschicht-Wandstruktur nach Anspruch 1 oder 2,
dadurch gekennzeichnet,
daß das gewellte Gittermaterial (6) mit der massiven Wandschicht (2) über eine Haftverbindung verbunden ist.

4. Mehrschicht-Wandstruktur nach einem der Ansprüche 1 bis 3,
dadurch gekennzeichnet,
daß das gewellte Gittermaterial aus Wellengitterstreifen (14, 18, 22, 32, 34) mit quer zu deren Längsausdehnung verlaufenden Wellen gebildet ist.

5. Mehrschicht-Wandstruktur nach einem der Ansprüche 1 bis 4,
dadurch gekennzeichnet,
daß die massive Wandschicht eine CSS-Schicht (Chemie-Schutz-Schicht) ist.

6. Verfahren zur Herstellung einer Mehrschicht-Wandstruktur gemäß einem der Ansprüche 1 bis 5, gekennzeichnet durch folgende Verfahrensschritte:
a) Bereitstellen der massiven Wandschicht (2);
b) Auflegen des gewellten Gittermaterials (6) auf die massive Wandschicht (2) und Befestigen auf derselben durch Verkleben oder dergleichen;
c) gegebenenfalls Auflegen einer nicht gewellten Gittermateriallage (8) auf das gewellte Gittermaterial (6) und Befestigen auf derselben mittels Flechtfäden (10),
d) gegebenenfalls Auflegen oder Aufbauen einer weiteren massiven Wandschicht oder einer Mehrschicht-Wandstruktur auf der Gittermateriallage (8).

7. Verfahren nach Anspruch 6, gekennzeichnet durch folgende Verfahrensschritte:
a) Herstellen einer massiven Wandschicht (2) aus faserverstärktem Kunstharz und Anhärten derselben;
b) Herstellen des gewellten Gittermaterials (6) im Zuschnitt aus faserverstärktem Kunstharz, und Aushärten desselben;
c) Auflegen des gewellten Gittermaterials (6) auf die massive Wandschicht und Fixieren auf derselben;
d) Aushärten der massiven Wandschicht (2).

8. Verfahren zum Herstellen eines gewellten Gittermaterials nach Anspruch 6 oder 7,
dadurch gekennzeichnet,
daß ein ebenes, harzgetränktes Gittermaterial (64) auf eine Trommel (70) mit einer gewellten Oberfläche gewickelt wird,
daß über das Gittermaterial (64) ein gewelltes Band (74) gewickelt wird, dessen Wellenberge jeweils in Wellentäler der Trommeloberfläche eingreifen,
und daß nach dem Aushärten des Gittermaterials (64) dieses von der Trommel (70) abgenommen wird.

9. Verfahren zum Herstellen einer Mehrechicht-Wandstruktur nach Anspruch 6 oder 7,
dadurch gekennzeichnet,
daß ein ebenes, harzgetränktes Gittermaterial (120) zwischen einen ersten Abschnitt eines ersten gewellten Prägebandes (100) und ein mit diesem zusammenwirkendes zweites gewelltes Prägeband (110) geleitet wird, wobei die Wellenberge des einen Prägebandes (100) in die Wellentäler des anderen (110) eingreifen,
und daß eine ebene, harzgetränkte Wandschicht (125) in einem zweiten Abschnitt des ersten Prägebandes (100) zwischen das gewellte Gittermaterial und ein zweites, mit dem ersten Prägeband (100) zusammenwirkendes Andruckband (124) geleitet wird, welches die Wandschicht (125) an das Gittermaterial (120) andrückt.

10. Verwendung einer Mehrschicht-Wandstruktur nach einem der Ansprüche 1 bis 4,
dadurch gekennzeichnet,
daß die hohlraumbildende Wandschicht innen und die massive Wandschicht außen angeordnet ist und durch Aufbringen weiterer Wandung bestimmungsgemäß tragfähig gestaltet wird.

11. Verwendung einer Mehrschicht-Wandstruktur nach Anspruch 10,
dadurch gekennzeichnet,
daß innen an dem gewellten Gittermaterial spezielle Auskleidungsmaterialien befestigt werden können.

12. Verwendung einer Mehrschicht-Wandstruktur nach einem der Ansprüche 1 bis 5,
dadurch gekennzeichnet,
daß zur Herstellung eines doppelwandigen Rohrkörpers auf eine rohrförmige Mehrschicht-Wandstruktur (20, 22) mit außenliegender, aus einem gewellten Gittermaterial und einem nicht gewellten Gittermaterial gebildeter Wandschicht eine äußere massive Wandschicht durch schichtweises Aufbringen kunstharzgetränkter Fasern gebildet wird.
